# EUROPEAN PATENT SPECIFICATION

(11) **EP 2 100 714 B1**
(45) Date of publication and mention of the grant of the patent: **03.04.2013**
(21) Application number: 08356038.3
(22) Date of filing: 10.03.2008
(51) Int. Cl.: B29C 45/00, B29C 37/00

(54) **In- line moulding and metallisation**
Verkettete Formung und Metallisierung
Moulage et métallisation en ligne

(43) Date of publication of application: 16.09.2009
(73) Proprietor: Albéa Services, 92230 Gennevilliers (FR)
(72) Inventor: Crutchley, Edward, Tunbridge Wells Kent TN3 OYA (GB); Ghesquiere, Cécile, 56680 Plouhinec (FR)
(74) Representative: Rolland, Jean-Christophe

(56) References cited:
- DE-A1- 19 811 055
- DE-U1- 9 409 613
- JP-A- 2004 338 328
- JP-A- 2006 175 742
- US-A- 5 916 496
- S. RUNKEL: "Metallischer Hochglanz im Schnelldurchlauf" KUNSTSTOFFE, no. 10, 1 October 2007 (2007-10-01), pages 166-170, XP002488779 München
- C. STECKER: "Alles im Fluss" KUNSTSTOFFE, no. 5, 1 May 2007 (2007-05-01), pages 32-36, XP002488780 München

## Description

### Field of the invention

The present invention relates to a process for manufacturing metallised plastic moulded products. The invention relates more particularly to the manufacture of packaging or closures for the cosmetic packaging field, i.e. of make-up compacts, mascara dispensers, lipsticks, perfume bottles, vaporizer, etc., or part thereof such as for example caps, collars, bottles, jars.

### Background of the invention

Typical cosmetic closures are hollow annular bodies, usually with one closed end, and have generally a height to width (or diameter) ratio in the range of 0.1 to 10. Such cosmetic closures are consequently fully three dimensional objects. Three dimensional objects, as opposed to flat two dimensional objects, when metallised on their exterior surface present significant technical challenges, mainly because of the complexity of their exterior surface which prevents using a simple coating (spray or metal) system with line of sight treatment. Such closures, initially moulded in rigid plastic, are subsequently covered or coated with a thin layer of metal. The closures are subsequently protected for esthetical, practical or resistance reasons such as assuring the chemical resistance of the closures to sweat, perfume, and other cosmetic ingredients, or assuring wear and scratch resistance commonly required of cosmetic closures. The wear and scratch resistance required for metallised cosmetic closures is for example much more constraining than the wear and scratch resistance required for disk surfaces, such as CDs or DVDs. Indeed, a CD or DVD metallised surface, having generally a metal layer coated onto a polycarbonate surface, presents poor adhesion properties, and therefore cannot stand the generally used adhesion tests of the peeling of a fixed tape of 3M® references 202,616,810 or 853 with nominal peel strengths to steel ranging from about 3.9 to 5.2 N/10mm.

In prior art techniques, it is known to perform the metallisation of plastic via a wet process, such as an electrolytic deposition or electroplating by catalysis (described for example in EP 1 016 516), or via a dry process, such as a vacuum deposition and especially physical vapour-phase deposition ("PVD"). Examples of PVD metallization include thermal evaporation or cathodic sputtering under vacuum. PVD is the most common method for metal deposition in order to create a high quality metallic look on a plastic part. It is less expensive than electroplating, especially in gold, or the use of metallic outer sheaths, and gives a better look than that achieved by adding metallic pigments to the plastic prior to moulding.

Plastic objects are typically obtained by moulding, for example by injection in multi recess moulds, by extrusion-blowing, by injection-blowing etc.

The moulding process and the metallisation process are traditionally performed by different entities or companies, at different geographic sites, metallisation being known as a speciality technology.

Large quantities of plastic objects are consequently moulded, stocked for example onto thermoformed trays or containers in order to be carried up to the metallisation site, where they are treated for metallisation, using an apparatus such as the one described in international patent application WO 00/28105.

Known metallisation processes of a rigid three dimensional plastic moulded object by means of PVD comprise:
- a preprocessing step to prepare the surface of the object for the metallisation step;
- a metallisation step under vacuum by means of evaporation or sputtering of metal parts onto the surface of the object and;
- a postprocessing step to protect the extremely thin metal layer created in the preceding step.

The preprocessing step consists in applying, by spraying, a basecoat of lacquer or varnish (also known as primer coat) that enhances adhesion between the plastic from which the object is made and the metal layer to be applied thereto. The basecoat also provides a smooth surface, and hides small surface defects such as scratches, so that the reflection of the metal to be coated thereon is improved. The preprocessing step further comprises, before spraying the basecoat, a dust removal using de-ionization assisted by mechanical brushing, optionally a degreasing, and/or optionally a flame or plasma treatment for a better adhesion of the basecoat to the plastic surface. Preprocessing can also include after spraying the basecoat, a flow out step (to allow spreading out and to ensure evenness of the coating), a drying step and a curing step. The international patent application WO00/28105 describes an improvement to the above-mentioned process, consisting in performing the preprocessing step, the metallization step and the postprocessing step of the metallisation process, through the use of an automatic transport means and a buffer device between the preprocessing device, the PVD device and the postprocessing

Preprocessing of the object to be metallised is necessary as the surface of the object may become contaminated during the time between moulding and metallization.

The postprocessing step consists of applying or spraying a topcoat of lacquer or varnish (also known as a protective coat) to protect the metallised layer. The postprocessing step further comprises, before spraying the topcoat, a flow out step to allow a regular coating of the topcoat, a drying step and a curing step.

With prior art metallization processes, the separation of the moulding process and of the metallisation process is due to the difference in the work output of the two processes.

Conventional PVD devices operating on the principle of thermal evaporation and sublimation of the metal have a volume in the order of 1000 litres, and a cycle time of 15 to 20 minutes which classify traditionally the PVD process as a batch process (or semi-continuous process as described in WO 00/28105). Such PVD devices have a work output in the range of 10,000 to 30,000 objects / hour. Comparatively the continuous moulding process has a work output of 1,000 to 4,000 objects / hour.

Due to the higher work output of the metallization process with respect to the moulding process, to maximize the return on investment of the very expensive metallisation equipment, the processes are not directly linked. The transport costs are consequently high, so as the delays to complete the manufacture of the products.

Another problem with prior art metallization processes is the complexity of the whole manufacturing process and associated equipment. Indeed, such equipment generally includes at least the following devices: a moulding device, a preprocessing device comprising a dust removal unit, a degreasing unit, a flame or plasma treatment unit, a basecoat spraying unit, a basecoat flow out unit, basecoat drying unit, a basecoat curing unit, the buffer device, the metallisation device, the postprocessing device comprising a topcoat spraying unit, a topcoat flow out unit, a topcoat drying unit, and a topcoat curing unit.

There is a need therefore for a simplified and therefore less expensive process for manufacturing metallised plastic moulded products.

There is also a need to reduce the preprocessing of the part to be metallised, as preprocessing steps such as basecoating and degreasing typically make use of solvents which have a negative environmental impact.

JP 2004338328 and DE 19811055 disclose a process according to the preamble of claim 1.

### Summary of the invention

Accordingly, there is provided a process for manufacturing a metallised plastic moulded product having a height / width ratio between 0.1 and 10 according to claim 1.

The way of thinking the manufacture of three dimensional metallised plastic moulded products has been totally changed. The metallisation process and the moulding are performed in closed areas and the transfer from the moulding to the metallisation process is performed automatically, continuously with automated means. Performing the moulding and the metallisation process inline, i.e. without the intervention of a human operator between the output of the moulding machine and the input of the metallisation unit, reduces the manipulation and transport costs of the plastic components and a significant source of contamination.

Performing the metallisation process in-line with the moulding reduces drastically the delay between the moulding and the metallisation which can advantageously be reduced to less than 5 minutes.

Another advantage of the present process is that by reducing the time between the moulding and the metallisation process and, furthermore by eliminating the transport of the component and associated manipulations, the component surface is found to be cleaner and contaminant free when entering the metallisation process. With respect to prior art processes, in which hours, days or even weeks could pass between the moulding and the metallisation process, the pollution of the component surface before the metallisation process is reduced because additives in the plastic material do not have time to exude after moulding. Consequently, steps of dust removal and of degreasing are no longer necessary during the metallisation process. Skipping such steps implies reducing the size and the cost of the global metallisation apparatus. Solvents were used during the degreasing of the plastic component such that skipping the degreasing step has a positive environmental impact.

Additionally, having the moulding and the metallisation process done consecutively in a short time period and in a limited geographical area permits a quick closed-loop or process feedback on the different manufacturing parameters that can act on the finished product quality and on the direct interactions between the different parameters. Such parameters could be, for example, the composition of the plastic material, the rheology of the plastic material, and more particularly, the viscosity characteristics, the temperature of the mould, the hold pressure and the time of hold pressure, the cooling cycle, etc. whereas beforehand, when moulding was dissociated from metallisation, this was not practically possible.

According to the present invention the metallisation step consists of applying a metal layer directly onto the plastic surface of the plastic component, without providing a basecoat. The component is transferred from the moulding to the metallisation step, without providing the prior art step of spraying a basecoat on the surface of the component before the metallisation step. The in-line process according to the invention allows surprisingly a good quality metallisation even without the use of a basecoat thanks to the low alteration of the plastic surface. The manipulations of the component after moulding are reduced to a minimum, limiting consequently the scratching of the plastic surface. The manipulation of the component between the moulding and the metallisation step is advantageously reduced to two contacts between the plastic surface to metallise and a rigid element and preferably to a single contact.

The intermediary basecoat sprayed onto the plastic surface in the prior art contained usually solvent or other environmental unfriendly products such that providing a metallisation process without applying a basecoat has a positive environmental impact. Furthermore, skipping the application of the basecoat simplifies considerably the manufacturing process and reduces the cost of the associated manufacturing apparatus.

According to one aspect of the present invention, the metallisation step is performed by a vacuum process of physical vapour-phase deposition by cathodic sputtering. The latest generation of PVD metallisation technology provides low volume metallisation chambers of less than 20 litres, and preferably of less than 10 litres, and with a metallisation cycle time of less than 1 minutes and preferably of less than 30 seconds. Such metallisation chambers allow for the simultaneous metallization of 1 to 20 components,contributing advantageously to changing the metallisation process into a continuous process and to the reduction of the metallisation process time. The whole manufacturing process can actually be completed in a maximum time of 15 minutes.

According to another aspect of the present invention, the metallisation process further comprises following the metallisation step, the steps of:
- applying a topcoat onto said metal layer
- performing a flow-out of the top coat;
- performing a drying of the topcoat; and
- curing the topcoat.

The components are moulded from polymers such as SAN, ABS, or polypropylene materials . When using styrenics, a better metallisation quality has been shown while choosing styrenics having a Melt Flow Index above 20 as measured at 220°C under 10kg for 10 minutes and by allowing the molten polymer to conform with the high degree of polish on the mould surface by moulding the polymer into a high temperature mould above 60°C. When using polypropylene, better metallisation quality has been shown while choosing polypropylene having a Melt Flow Index above 20 as measured at 230°C under 2.16 kg for 10 minutes, by allowing the molten polymer to conform with the high degree of polish on the mould surface by moulding the polypropylene into a high temperature mould above 60°C, and optionally by oxidizing the polypropylene surface of said components in order to promote adhesion. The oxidizing can be one of flame treatment, plasma treatment, corona treatment and chemical treatment.

According to yet another aspect of the present invention, the atmosphere surrounding the component between the moulding and the metallisation step can be controlled, i.e. the transfer from the output of the moulding to the input of the metallisation step can be performed in a clean and closed enclosure or under a dust hood.

Furthermore, there is an apparatus for manufacturing a metallised plastic moulded product having a height / width ratio between 0.1 and 10, comprising:
- a moulding device;
- a device for applying a metal layer by physical vapour-phase deposition having a metallisation chamber of less than 20 litres and a cycle time of less than 1 minute; and
- a transfer system of a component from the moulding device up to the metallisation chamber.

In one aspect, the transfer unit comprises a robotic arm that grabs a component from the moulding device to place it onto a holder, wherein the parts of the robotic arm in contact with said component are constituted of a material that does not leave traces onto said component. Such materials are, for example silicone or EPDM, highly polished and hardened steel or anodized aluminium.

Preferably, the transfer system further comprises a robotic arm that grabs the holder onto which the component is placed and places the holder and the component into the metallisation chamber. The holder comprises advantageously a plurality of elastic wings to better conform to small dimensional changes that may occur in the component during moulding. The holder is preferably constituted of a blend of ABS and polycarbonate that provides a good adhesion for successive metal/topcoat layers.

Furthermore, the present invention provides a simplified process for manufacturing metallised moulded plastic products, while keeping a good metallisation quality of the finished product, i.e. meeting the chemical resistance requirement and the wear and scratch resistance requirements generally asked in the cosmetic field.

Other aspects and advantages of the invention will become apparent from the following description, taken in conjunction with the accompanying drawings, illustrating by way of example the principles of the invention.

### Brief description of the drawings

Figure 1 shows a schematic view of an apparatus for manufacturing a metallised plastic moulded product;
Figure 2 is a cross section view of a first component to metallise;
Figure 3 is a cross section view of a second component to metallise;
Figure 4A is a schematic side view of a holder designed to hold a component;
Figure 4B is another 90° rotated side view of the holder of figure 4A;
Figure 4C is a schematic top view of the holder of figure 4A;
Figure 5 is a side view of a portion of a chain conveyor; and
Figure 6 shows a schematic view of a loading station for loading component from a moulding device up to a conveyor.
Figure 7 shows a flow-chart of a process for manufacturing a metallised plastic moulded product.

### Detailed description of the invention

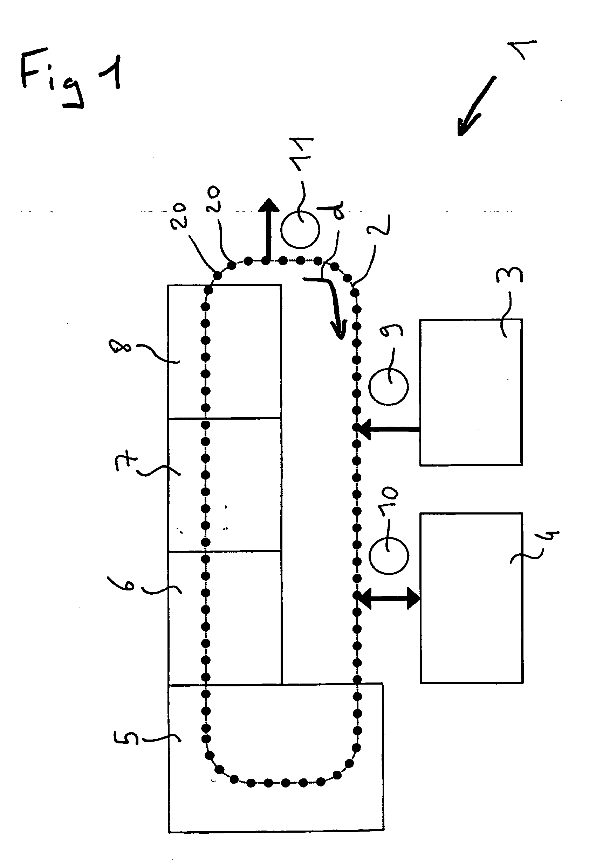

Figure 1 shows an apparatus 1 for manufacturing a metallised plastic moulded product. Broadly speaking, the apparatus 1 is composed of a conveyor 2, a moulding device 3, a metallisation device 4, a spraying unit 5, a flow out unit 6, a drying unit 7, a curing unit 8 and of a loading station 9 for loading components onto the conveyor 2 after moulding, a loading/unloading station 10 for loading components into the metallisation device and for unloading metallised components from the metallisation device onto the conveyor 2, and an unloading station 11 for unloading finished products from the conveyor 2.

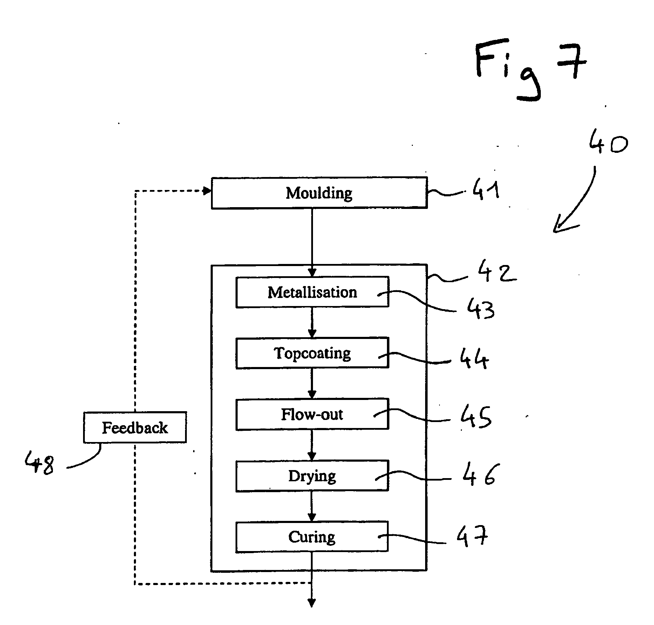

A process 40 for manufacturing a metallised plastic moulded product, shown in figure 7, can be performed in apparatus 1. The process 40 consists in a moulding process 41, or moulding, in-line with a metallisation process 42. The manipulations between the moulding process 41 and the metallisation process 42 are performed in an automated way, as understood by the term "in-line". The metallisation process 41 may consist in a metallisation step 43, performed for example by a vacuum process of physical vapour deposition, followed by the steps of applying a topcoat 44, performing a flow-out 45 of the topcoat, performing a drying 46 of the topcoat and curing 47 the topcoat. The manufacturing process is finished after curing 47 and the finished products can then be for example stored. A feedback process 48 allowing an adjustment of the moulding parameters can be implemented to achieve a desired quality level for the products. The manufacturing process 40 can be completed in less than 15 minutes, while the metallisation step 43 can be completed in less than 1 minute.

Products to manufacture are particularly parts of packaging for cosmetics, for example, closures.

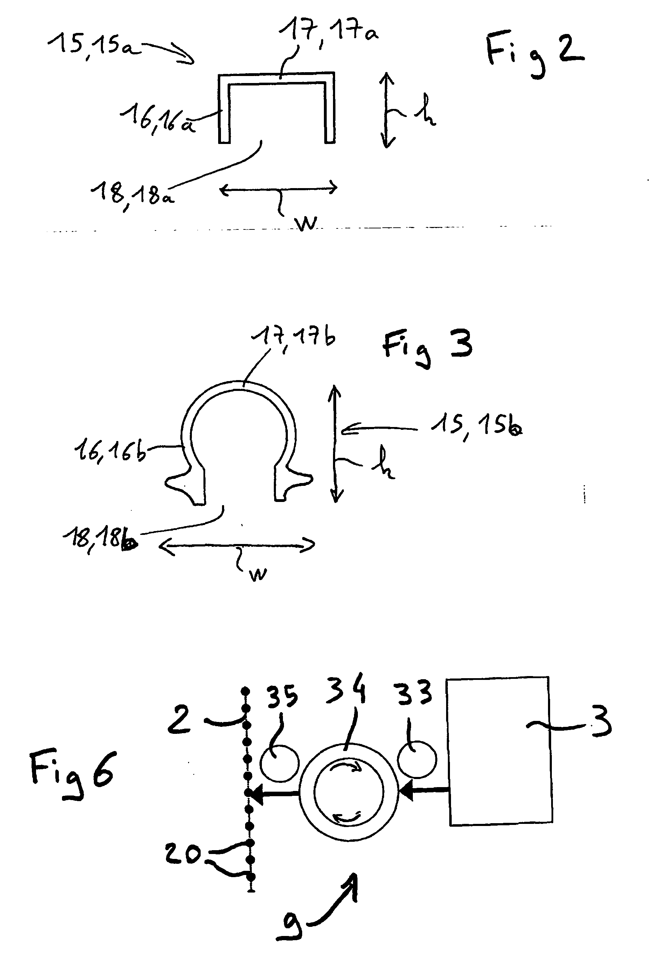

Figures 2 and 3 show respectively a bottle cap 15a, 15b which is an example of a three dimensional plastic component 15 to metallise according to the invention. Such a component 15 is particularly a hollow annular body 16, 16a, 16b with a closed end 17, 17a, 17b and an open end 18, 18a, 18b. Taking the open end 18 as the bottom horizontal reference, the component 15 has a height h / width w ratio (or height/diameter ratio) comprised between 0.1 and 10, and preferably comprised between 0.2 and 5, and more preferably comprised between 0.5 and 2. The term "width" should be understood as the maximum horizontal length crossing the component. Products manufactured according to the invention have preferably a maximum height or width of 150 mm, and more preferably of 50 mm.

Components 15 are of rigid plastic material and moulded in the moulding device 3 which is for example an injection moulding device. The components 15 are disposed into open mould cavities at the output of the moulding device 3.

Each component 15 is then handled with care at the loading station 9 and transferred from the moulding device 3 onto the conveyor 2.

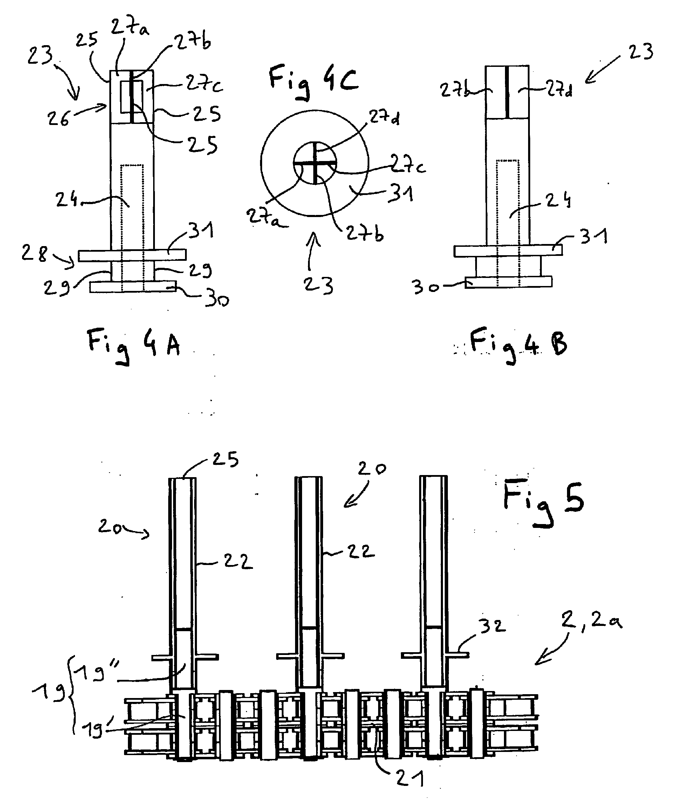

The conveyor 2 is for example a chain conveyor 2a comprising multiple spaced apart seats 19 receiving supports 20. Such chain conveyor 2a, seats 19 and supports 20 are more particularly shown in figure 5. Each seat 19 is composed of a bottom part 19' and a top part 19", the bottom part 19' being attached to the movement transmitter of the conveyor 2 composed of a double chain 21 and the top part 19" extending above the double chain 21. The supports 20 are fastened to the seats 19 in such a way that the supports can rotate. More particularly, the support 20 comprises a hollow circular shaft 22 with a bottom open end engaged around the top part 19" of the seat 19.

A holder 23 adapted to hold a component 15 is placed on top of each support. Such holder 23 is shown in figures 4A to 4C. Each holder 23 comprises for example a cavity 24, shown in dot line on figures 4A and 4B, into which is engaged an end 25 of the shaft 22 of the support 20. The holder 23 is designed in order to be integral in rotation with the support 20, when engaged onto the support 20.

The holder 23 is more particularly adapted to be engaged into the open end 18 of the component 15. For example, an outer surface 25 of the holder comes into contact with an interior surface 26 of the hollow body 16 so as to maintain the component 15 onto the holder 23 and to prevent the component to rotate with regard to the holder. In such cases, only the exterior surface of the component needs to be metallised. In a very broad definition, the holder is designed to hold or maintain the component while touching surfaces of the component that do not need to be metallised.

The holder 23 of figures 4, designed to hold the component 15b of figure 3, includes, for example, a free end constituted of a holding part 26 with four wings 27a to 27d. Two wings 27a;27c are cut out so as to confer elasticity to the holding part to absorb small dimensional changes that can occur in the component during the moulding and to improve the fastening between the holder and the component. Consequently, regardless of the position of the holder with respect to the component, the component is supported by the holder 23 throughout the process and is hereinafter referred to as a holder/component arrangement.

The loading of the components 15 onto the conveyor 3 is preferably done at the loading station 9 with a robotic arm. The robotic arm grabs a component 15 from the moulding device 3 and deposits it onto a holder 23. When handling a component, a part of the robotic arm is in contact with the exterior surface of the component (i.e. the exterior surface of the hollow body or of the closed end) which must be metallised. The part in contact with the surface to metallise may be, for example, a suction cup in case of a suction type grabbing robotic arm or fingers in case of a finger prehensile type robotic arm, and is preferably constituted of a flexible rubber, typically of silicone or EPDM, or of a highly smooth and hard material, typically a highly polished and hardened steel or anodized aluminium. Such precaution is necessary to avoid leaving traces on the components, to avoid scratching the surface to metallise and to keep the surface to metallise as smooth as possible.

The conveyor 2 advances, following the conveying direction indicated by the arrow d. The movement of the conveyor can be either incremental or continuous. The component 15 loaded after moulding onto a holder 23 passes in front of the loading/unloading station 10 for loading components into the metallisation device and for unloading metallised components from the metallisation device onto the conveyor 2. The loading/unloading station 10 is preferably constituted of a robotic arm that grabs and manipulates the components 15 through the intermediary of the holders 23. The component can then advantageously be handled without the surface to metallise being touched. This robotic arm is preferably a two fingered prehensile robotic arm. The end of the holder 23 opposite to the holding part 26 is for example a grabbing part 28 with two parallel flat walls 29 included between two protrusions 30; 31 providing ideal grabbing notches for the fingers of the two fingered prehensile robotic arm. The robotic arm grabs the holder/component arrangement and inserts it in the metallisation device 4 and more specifically, at an input of a metallisation chamber.

Metallisation devices of the type used with the present manufacturing and metallisation process are well known in the art and will therefore not be described in detail.. The metallisation device uses preferably the Physical Vapour Deposition by cathodic sputtering. At the input of the metallisation chamber, the holder is secured for example to a rotational plate. The holder/component arrangement is then transferred in the metallisation chamber by rotation of the rotational plate. Vacuum is provided in the metallisation chamber and a metallisation source placed in front of the component sputters metal onto one side of the component. The holder/component arrangement is rotated by 180° and the metallisation source sputters metal onto the other side of the component. The metal sputtered is preferably aluminium, but may be any one of chromium, nickel, titanium, silver, copper or an alloy including one or more of these metals. The holder/component arrangement is then transferred at an output of the metallisation chamber.

The robotic arm of the loading/unloading station 10 grabs and manipulates the components 15 through the intermediary of the holders 23 to put the holder/component arrangement onto a support 20 of the conveyor 2.

For higher throughput, two robotic arms may be used. The input and the output of the metallisation chamber can be at the same place or at different places, depending of the configuration of the metallisation device.

The metallisation chamber of the metallisation device has preferably a volume of less than 20 litres, and more preferably of less than 10 litres. Preferably, from 1 to 12 components can be treated at the same time in the metallisation chamber and consequently loaded/unloaded in the same time, or in a very short time of a few seconds, in the input/output of the metallisation chamber. Using small metallisation devices allows the metallisation step, i.e. from the input to the output of the metallisation chamber, to be completed in under one minute and preferably 30 seconds, with a sputtering operation requiring less than 5 seconds. This short processing time for a low number of metallised components facilitates the integration of the metallisation process in-line with the moulding. The work output of such metallisation device is lower than the work output of the commonly used metallisation devices with 1000 litres metallisation but more compatible with the work output of the moulding process. By reducing the work output of the metallization process, there is no need to provide a vast buffer zone upstream the metallisation device in which the components to be metallised accumulate further reducing the risk of pollution of the component surface and the time between the moulding and the metallisation step.

The fully three-dimensional products to manufacture have surfaces to metallise that can not be in the range of influence of a unique metallisation source, i.e. seen from the metallisation source. The products have for example two opposed faces to metallise. Instead of having the component turning in the metallisation chamber, the component can move from a first metallisation chamber with a first metallisation source to a second metallisation chamber. In such second metallization chamber, a second metallisation source is placed on the other side of the component with respect to the position of the first metallisation source. In a different embodiment, two metallisation sources placed on opposite sides of the component, in a single metallisation chamber, may be used.

When placed on the conveyor 2 after the metallisation step, the holder/component arrangement is post processed by being conveyed successively into the topcoat spraying unit 5, the topcoat flow out unit 6, the topcoat drying unit 7, and the topcoat curing unit 8. Such post processing steps are well known in the art. The topcoat sprayed is preferably an organic topcoat. The drying is performed by Infrared irradiation in the topcoat drying unit 7 when the topcoat comprises a solvent or otherwise during the curing by Ultraviolet irradiation in the topcoat curing unit 8.

A rotation is preferably applied to the holder/component arrangement during the passage in the units 6,7 and 8. This rotation is applied by a chain, or a friction belt, engaging a toothed or a friction wheel 32 arranged on the support 22 close to the double chain 21, as visible on figure 5.

When leaving the curing unit 8, the component 15 is a finished manufactured product and is unfastened from the holder and unloaded at the unloading station 11 for example by a robotic arm or by an human operator. The support 22 stays on the conveyor 2 for a subsequent manufacturing cycle.

When a support performs a new manufacturing cycle, parts of its surface may have been subject to one or more preceding metallisation steps and to one or more preceding post processing steps with application of a topcoat. The metal and topcoat layers thus accumulated onto the support may scale, peel off or left off from the holder and create dust and pollution during transfers of the holder/component arrangement or in the metallisation device 4. Such dust and pollution can be detrimental to the quality of the finished product. The exposed surfaces of the holder are consequently deliberately reduced. Furthermore, the holders are advantageously manufactured in a material, such as a blend of ABS and polycarbonate, providing good adhesion of the successive layers it receives, and heat stability in the process. The parallel grab walls 29, which are highly solicited by the robotic arm fingers and thus more susceptible for scaling, are advantageously protected from the metallisation and the spraying by the protrusion 31 extending between the parallel grab walls 29 and the component placed on the holder. Hiding parts can also be provided on the holder to hide relative to the metallisation source surfaces of the component that should not be metallised, for example the interior surface of a cap. A replacement of the holder must be performed on average approximately every 150 turns to minimise pollution risks.

Figure 6 shows another embodiment of the loading station 9 for the loading or transfer of the components 15 from the output of the moulding device 3 up to the conveyor 2.

Components are held into the open mould cavities by a commonly used press robot 33 and transferred onto a transition conveyor 34. The components are then conveyed in front of a robotic arm 35 that transfers them onto the conveyor 2. Above mentioned precautions when touching the surface to metallise are also applicable to the press robot 33 and the robotic arm 34. The use of the transition conveyor 34 results from the need to unload rapidly the moulding device which comprises multiple mould cavities and consequently multiple components. The transition conveyor 34 can also be used as a small buffer area, being able to compensate for approximately one minute of malfunction of the moulding device.

A transfer system of a component from the moulding device up to the metallisation chamber can be composed for example of the loading station 9, a part of the conveyor 2, the loading/unloading station 10 and of the use of holders 23.

The number of contacts with the surface to metallise is minimised between the moulding and the metallisation step. Such number is preferably of two and more preferably of one.

By reducing the delay and the operations such as storage, transport or manipulations between the moulding and the metallisation step, the component is perfectly clean and the plastic surface has better adhesive properties when entering the metallisation device. Consequently, the steps of cleaning the surface by dust removal or by degreasing are not necessary and furthermore, the step of spraying a basecoat on the surface to metallise is no longer needed.

Advantageously, the atmosphere surrounding the component between the moulding device and the metallisation device can be controlled, particularly to provide a dust and pollution free atmosphere, to assure that the component stays clean while inside the transfer system. Such a setup can be achieved by providing an enclosure around the transfer system into which filtered air is blown to create an overpressure. Filters that may be used are, for example, EU5 filters or better. Hereinafter are described experimentation performed to highlight advantages of the present invention.

Among the criteria that are considered when evaluating the quality of the finished product, are the adhesion of the metal layer on the finished product and the gloss or absence of haze on the surface of the product.

Adhesion is measured using a technique typically used in the field consisting in
- crosshatching the surface; and
- fixing a tape such as 3M® references 202,616,810 or 853 with nominal peel strengths to steel ranging from about 3.9 to 5.2 N/10mm on a referenced steel surface;
- peeling the tape;
- estimating the percentage of the lift off of the coating with the crosshatch.

An excellent result is required for the products, corresponding to a percentage of lift off of less than 5%, and preferably of 0%.

Gloss or absence of haze is measured by visual appreciation of the appearance of the surface of a certain quantity of finished products. An excellent result is achieved when it is not possible to see visually a difference between a product and a similar product in which a basecoat has been applied as known in the prior art. Such gloss or absence of haze can also be measured by a reflectance measurement, for example with a Minolta® Multi Gloss 288 apparatus with an incidence angle of 20° as shown in table 5.

### Example 1 :

Plastic components in PCTA, PC, PETG, PMMA, PCTG have been metallised with aluminium according to the above described process, i.e. without cleaning steps and application of a basecoat. The finished products have then been submitted to adhesion and gloss measurements.

Table 1 shows the results and more particularly that PCTA and PETG have advantages in both excellent adhesion and absence of haze in relation to PC, PMMA, or PCTG. It is consequently possible to establish that naturally high-gloss polymers such as copolyesters can be satisfactorily metallised without cleaning steps and application of a basecoat.

**Table 1**

| **Plastic** | **Adhesion of aluminium** | **Gloss / absence of haze** |
|---|---|---|
| **resin** | **(3M tape reference 853)** | |
| PCTA | Excellent | Excellent |
| PC | Poor | Excellent |
| PMMA | Poor | Excellent |
| PETG | Excellent | Excellent |
| PCTG | Excellent | Good |

### Example 2 :

Plastic components in "commodity" polymers such as PP, ABS, SAN have been metallised with aluminium according to the above described process, i.e. without cleaning steps and application of a basecoat. The finished products have then been submitted to adhesion and gloss measurements.

By "commodity" polymers is meant polymers that are usually used for manufacturing the products addressed by the invention because of their physical properties and low costs.

Table 2 shows the results and, more particularly, that products moulded in ABS and SAN have the required adhesion property but present unsatisfying hazes and that products moulded in PP does not meet any of the requirements.

**Table 2**

| **Plastic** | **Adhesion of aluminium** | **Gloss / absence of haze** |
|---|---|---|
| **resin** | **(3M tape reference 853)** | |
| PP | Poor | Poor to medium |
| ABS | Excellent | Poor to medium |
| SAN | Excellent | Medium to good |

### Example 3 :

It has been found that by oxidizing the surface of the PP component between the moulding and the metallization step, for example by flame treatment, plasma treatment, corona treatment or chemical treatment, while using the process used in example 2, the adhesion of the aluminium on the PP surface is improved and meet the adhesion requirements (see table 3).

**Table 3**

| **Plastic** | **Adhesion of aluminium** | **Gloss / absence of haze** |
|---|---|---|
| **resin** | **(3M tape reference 853)** | |
| PP oxidized | Excellent | Poor to medium |

### Example 4 :

It has been found that by increasing the melt index of 'commodity' polymers, while using the process used in examples 2 and 3, the gloss can be improved. It signifies that a more fluid material shows less haze after metallisation.

For example, a product moulded in PP with a melt-flow index (MFI) of 25, as measured at 230°C under 2.16kg, for 10 minutes, gives better results than a product moulded in PP with a MFI of 12, as measured in the same conditions. Equally, a product moulded in ABS, with a MFI of 25, as measured at 220°C under 10kg, for 10 minutes, gives better results than a product moulded in ABS, with a MFI of 15, as measured in the same conditions. Equally, a product moulded in SAN, with a MFI of 22, as measured at 220°C under 10kg, for 10 minutes, gives better results than a product moulded in SAN, with a MFI of 15, as measured in the same conditions. (see table 4)

**Table 4**

| **Plastic resin** | **Plastic Fluidity (MFI)** | **Gloss / absence of haze** |
|---|---|---|
| Polypropylene | 2 (230°C, 2.16Kg, 10 min) | Poor |
| | 12 | Poor |
| | 18 | Poor |
| | 25 | Medium-Good |
| ABS | 2 (220°C, 10Kg, 10 min) | Poor |
| | 8 | Poor |
| | 25 | Medium-Good |
| SAN | 13 (220°C, 10Kg, 10 min) | Medium-Good |
| | 19 | Medium-Good |
| | 22 | Medium-Good |

### Example 5 :

It has been found that by better polishing the mould cavities of the moulding device, the surface of the moulded component become smoother and the finished product shows improvement of the gloss. Furthermore, it has been found that using a warmer mould than would be used in normal moulding conditions, i.e. the moulding conditions used to optimize production rates, allows the molten polymer to conform better with the high degree of polish on the surface of the mould cavity.

PP, ABS, SAN plastic materials with the highest plastic fluidity tested in example 4 have been used to mould components in moulds having different temperatures, more particularly in mould heated at 40°C, 60°C and 80°C during the moulding. After metallisation with the process used in example 4, the finished products have then been submitted to adhesion and gloss measurements.

Table 5 shows the results and more particularly that
- products moulded in PP with a melt-flow index (MFI) of 25, as measured at 230°C under 2.16kg, for 10 minutes in moulds heated at 80°C meet the gloss requierement;
- products moulded in ABS with a MFI of 25, as measured at 220°C under 10kg, for 10 minutes in moulds heated at 80°C meet the gloss requierement;
- products moulded in SAN with a MFI of 22, as measured at 220°C under 10kg, for 10 minutes in moulds heated at 60°C or at 80°C meet the gloss requierement.

Reflectance measurements have also been performed, for example with a Minolta® Multi Gloss 288 apparatus with an incidence angle of 20° for the products moulded in ABS and SAN and confirm the improvement of the gloss of the metallised surface when moulded in higher temperature moulds. The reflectance, in the above mentioned measure conditions, is assumed to meet requirements when higher than 75%.

**Table 5**

| **Plastic** **resin** | **Plastic Fluidity** **(MFI)** | **Condition** **(Mould temperature)** | **Gloss / absence of haze** | **Reflectance at 20°** **(incidence angle)** |
|---|---|---|---|---|
| PP | 25 | 40°C | Medium -Good | |
| | (230°C, 2.16Kg, 10 min) | 60°C | Good | |
| | | 80°C | Excellent | |
| ABS | 25 | 40°C | Medium -Good | 62% |
| | (220°C, 10Kg, 10 min) | 60°C | Good | 72% |
| | | 80°C | Excellent | 78% |
| SAN | 22 | 40°C | Medium -Good | 65% |
| | (220°C, 10Kg, 10 min) | 60°C | Excellent | 82% |
| | | 80°C | Excellent | 83% |

The use of a copolymer of SAN and ABS, for example a SAN/ABS 50/50, can of course be envisaged.

A surprisingly good and satisfactory metallisation result, which can be defined as a 20° reflectance superior to 75%, together with the absence of signs of pollution or surface damage associated with an off-line process, can be achieved by metallising immediately after moulding, together with judicious selection of the plastic polymer and its moulding conditions.

Examples 1 to 5 show that the moulding parameters, such as the temperature of the mould or the polish quality of the mould cavities, the choice of the plastic material used, and more particularly the fluidity of the plastic material, and/or the oxidation degree of the plastic surface can be adjusted adequately to obtain the required quality products.

Preferably, according to the invention, the delay between the opening of the mould and the insertion into the metallisation chamber is kept under 8 minutes, and more preferably under 5 minutes, i.e. the transfer time on the transfer system between the moulding device and the metallization device. Usual additives added in the plastic material have not the time to exude and to pollute the surface of the plastic component, avoiding the need to proceed to a surface cleaning for example by degreasing. Care brought to the manipulation of the component limits dusts or traces on the surface of the component, avoiding the need to proceed to a surface cleaning by dust removal and the need to spray a basecoat onto the surface of the component to provide a smoother and glosser surface for metallisation. Furthermore, within minutes following the moulding, the plastic surfaces are more open for adhesion. Consequently, the metallisation can be advantageously done directly after moulding, i.e. without cleaning and basecoat spraying steps, and thus without the need of the associated devices.

The time spend in the metallisation device is preferably kept under 2 minutes, and more preferably under 1 minute or 30 seconds. The time spend in the post processing steps of spraying, flow-out, drying, curing is preferably kept under 5 minutes.

The delay between the opening of the mould of the moulding device and the completion of the finished product is consequently preferably kept under 15 minutes.

The rapid completion of the manufacturing process gives the possibility to perform a rapid feedback process after check of the quality of the metallisation on finished products. Moulding parameters can then, for example, be adjusted to achieve a desired quality level for the finished products. Such moulding parameters could be for example the mould temperature or the polishing degree of mould cavities, but the fluidity of the plastic materials or the specificity of the plastic materials could also be explored.

In the prior art, in which quantities of components are moulded before being transported to the metallisation unit, if a problem occurs in the moulding process or in the correlation between the moulding process and the metallisation process, quantities of components are lost, which is highly detrimental. According to the present invention, the manufacturing line can be stopped rapidly to solve the problem.

By having the whole manufacturing process performed in-line with automated means, a high reproducibility in the quality of the products is obtained, making the process of the invention very reliable.

The invention has been presented with components having a global rotational symmetry (i.e. circular) and adapted holders but can of course be extended to non circular component such as square caps or non symmetrical components. The holding part of the holder must be adapted consequently. Mistake-proofing system such as slots or stops can then be used to coordinate the movements of the robotic arms with the orientation of for example the holder.

The component can also been composed of for example just the hollow annular body with two open ends.

It is to be understood that the invention is not limited to the features and embodiments hereinabove specifically set forth, but may be carried out in other ways.

## Claims

1. A process for manufacturing a metallised plastic moulded product having a height /width ratio between 0.1 and 10, comprising the steps of:
- plastic moulding a component having a plastic surface to metallise;
- performing a metallisation process comprising a metallisation step of said component;
wherein said metallisation process is performed in-line with said moulding, without the intervention of a human operator between the output of the moulding machine and the input of the metallisation unit where the metallisation step consists in applying a metal layer directly onto the plastic surface of the plastic component, without providing a basecoat, wherein
said components are moulded from polymers, **characterized in that** the moulding comprises
providing either ABS or SAN having a Melt Flow Index above 20 as measured at 220[deg.]C under 10kg for 10 minutes, or polypropylene having a Melt Flow Index above 20 as measured at 230[deg.]C under 2.16 kg for 10 minutes; and
allowing the molten polymer to conform with the high degree of polish on the mould surface by moulding the polymer into a temperature mould above 60[deg.]C.

2. The process according to claim 1, in which the component enters the metallisation process less than 5 minutes after moulding.

3. The process according to any one of the preceding claims, in which the metallisation step is performed by a vacuum process of physical vapour-phase deposition (PVD).

4. The process according to claim 3, in which the metallisation step is performed by a vacuum process of physical vapour-phase deposition by cathodic sputtering.

5. The process according to any one of the preceding claims, in which the metallisation step is performed in less than 1 minute, and preferably in less than 30 seconds.

6. The process according to anyone of the preceding claims, in which the metallisation process further comprises, following the metallisation step the steps of
- applying a topcoat onto said metal layer
- performing a flow-out of the top coat;
- performing a drying of the topcoat; and
- curing the topcoat.

7. The process according to any one of the claims 1 to 6, in which said components are moulded from polypropylene and wherein the moulding comprises:
- oxidizing the polypropylene surface of said components in order to promote adhesion.

8. The process according to claim 7, wherein said oxidizing is one of flame treatment, plasma treatment, corona treatment and chemical treatment.

9. The process according to any one of the preceding claims, wherein the whole manufacturing process is completed in a maximum time of 1 5 minutes.

10. The process according to any one of the preceding claims, further comprising a process feedback between said moulding and said metallisation step, whereby following said metallisation step, said moulding parameters may be adjusted to achieve a desired quality level for said products.

11. The process according to claim 10, wherein said process feedback includes adjusting at least one of mould temperature and polishing degree of mould cavities.

12. The process according to any one of the preceding claims, including a control of the atmosphere surrounding the component between the moulding and the metallisation step.

13. The process according to claim 12, wherein the control of the atmosphere surrounding the component consists in surrounding the component with filtered air under positive pressure.

14. The process according to any one of the preceding claims, wherein the metal used is one of aluminium, chromium, nickel, titanium, silver, copper or an alloy including one or more of these metals.

## Patentansprüche

1. Verfahren zur Herstellung eines metallisierten Kunststoffformteils mit einem Verhältnis von Höhe zu Breite zwischen 0,1 und 10, umfassend die Schritte:
- Formen einer Komponente aus Kunststoff mit einer zu metallisierenden Kunststoffoberfläche;
- Durchführung eines Metallisierungsverfahrens umfassend einen Schritt der Metallisierung der Komponente;
wobei das Metallisierungsverfahren in Reihe mit dem Formen durchgeführt wird, ohne die Intervention eines menschlichen Bedieners zwischen dem Output der Formmaschine und dem Input der Metallisierungseinheit, wo der Metallisierungsschritt im Aufbringen einer Metallschicht direkt auf die Kunststoffoberfläche der Kunststoffkomponente ohne das Bereitstellen einer Grundierung besteht, wobei die Komponenten aus Polymeren geformt werden,
**dadurch gekennzeichnet, dass** das Formen die Bereitstellung umfasst entweder von ABS oder SAN mit einem Schmelzflussindex über 20, gemessen bei 220 °C unter 10 kg für 10 Minuten, oder von Polypropylen mit einem Schmelzflussindex über 20, gemessen bei 230 °C unter 2,16 kg für 10 Minuten; und
Ermöglichen der Anpassung des geschmolzenen Polymers an den hohen Polierungsgrad an der Formoberfläche durch Formen des Polymers in einer Form mit einer Temperatur über 60 °C.

2. Verfahren nach Anspruch 1, wobei die Komponente weniger als 5 Minuten nach dem Formen in das Metallisierungsverfahren eintritt.

3. Verfahren nach einem der vorangehenden Ansprüche, wobei der Metallisierungsschritt mittels eines Vakuumverfahrens der physikalischen Gasphasenabscheidung (PVD) durchgeführt wird.

4. Verfahren nach Anspruch 3, wobei der Metallisierungsschritt mittels eines Vakuumverfahrens der physikalischen Gasphasenabscheidung durch Kathodenzerstäubung durchgeführt wird.

5. Verfahren nach einem der vorangehenden Ansprüche, wobei der Metallisierungsschritt in weniger als einer Minute, vorzugsweise in weniger als 30 Sekunden, durchgeführt wird.

6. Verfahren nach einem der vorangehenden Ansprüche, wobei das Metallisierungsverfahren im Anschluss an den Metallisierungsschritt folgende Schritte umfasst:
- Aufbringen einer Deckschicht auf die Metallschicht;
- Durchführen eines Abflusses der Deckschicht;
- Durchführen einer Trocknung der Deckschicht; und
- Härten der Deckschicht.

7. Verfahren nach einem der Ansprüche 1 bis 6, wobei die Komponenten aus Polypropylen geformt werden, und wobei das Formen umfasst:
- Oxidieren der Polypropylenoberfläche der Komponenten, um die Adhäsion zu fördern.

8. Verfahren nach Anspruch 7, wobei das Oxidieren ausgewählt ist aus Flammbehandlung, Plasmabehandlung, Koronabehandlung und chemischer Behandlung.

9. Verfahren nach einem der vorangehenden Ansprüche, wobei das gesamte Herstellungsverfahren in einer maximalen Zeit von 15 Minuten abgeschlossen wird.

10. Verfahren nach einem der vorangehenden Ansprüche, ferner umfassend ein Prozessfeedback zwischen dem Formen und dem Metallisierungsschritt, wodurch im Anschluss an den Metallisierungsschritt die Formungsparameter angepasst werden können, um ein gewünschtes Qualitätsniveau für die Formteile zu erreichen.

11. Verfahren nach Anspruch 10, wobei das Prozessfeedback die Anpassung der Formtemperatur und/oder des Polierungsgrades der Formhohlräume umfasst.

12. Verfahren nach einem der vorangehenden Ansprüche, umfassend eine Regelung der die Komponente umgebenden Atmosphäre während des Formens und des Metallisierungsschrittes.

13. Verfahren nach Anspruch 12, wobei die Regelung der die Komponente umgebenden Atmosphäre darin besteht, die Komponente mit gefilterter Luft unter positivem Druck zu umgeben.

14. Verfahren nach einem der vorangehenden Ansprüche, wobei das verwendete Metall ausgewählt ist aus Aluminium, Chrom, Nickel, Titan, Silber, Kupfer oder einer Legierung aus einem oder mehrerer dieser Metalle.

## Revendications

1. Procédé de fabrication d'un produit moulé en plastique métallisé ayant un rapport hauteur/largeur entre 0,1 et 10, comprenant les étapes suivantes :
- le moulage plastique d'un composant ayant une surface plastique à métalliser ;
- la réalisation d'un procédé de métallisation comprenant une étape de métallisation dudit composant ; ledit procédé de métallisation étant réalisé en ligne avec ledit moulage, sans l'intervention d'un opérateur humain entre la sortie de la machine à mouler et l'entrée de l'unité de métallisation, où l'étape de métallisation comprend l'application d'une couche métallique directement sur la surface plastique du composant en plastique, sans prévoir de couche de base, dans lequel lesdits composants sont moulés à partir de polymères,
**caractérisé en ce que** le moulage comprend la fourniture d'ABS ou de SAN ayant un indice de fusion supérieur à 20 tel que mesuré à 220°C sous 10 kg pendant 10 minutes, ou de polypropylène ayant un indice de fusion supérieur à 20 tel que mesuré à 230°C sous 2,16 kg pendant 10 minutes ; et
le fait de laisser le polymère fondu se conformer au degré élevé de poli sur la surface du moule en moulant le polymère dans un moule à une température supérieure à 60°C.

2. Procédé selon la revendication 1, dans lequel le composant entre dans le procédé de métallisation moins de 5 minutes après le moulage.

3. Procédé selon l'une quelconque des revendications précédentes, dans lequel l'étape de métallisation est réalisée grâce à un procédé sous vide de dépôt physique en phase vapeur (PVD).

4. Procédé selon la revendication 3, dans lequel l'étape de métallisation est effectuée grâce à un procédé sous vide de dépôt physique en phase vapeur par pulvérisation cathodique.

5. Procédé selon l'une quelconque des revendications précédentes, dans lequel l'étape de métallisation est réalisée en moins d'une minute et de préférence, en moins de 30 secondes.

6. Procédé selon l'une quelconque des revendications précédentes, dans lequel le procédé de métallisation comprend en outre, suite à l'étape de métallisation, les étapes suivantes :
- l'application d'une couche de finition sur ladite couche métallique
- la réalisation d'un étalement de la couche de finition ;
- la réalisation d'un séchage de la couche de finition ; et
- le durcissement de la couche de finition.

7. Procédé selon l'une quelconque des revendications 1 à 6, dans lequel lesdits composants sont moulés à partir de polypropylène et dans lequel le moulage comprend :
- l'oxydation de la surface de polypropylène desdits composants afin de favoriser l'adhérence.

8. Procédé selon la revendication 7, dans lequel ladite oxydation est l'un parmi un traitement à la flamme, un traitement au plasma, un traitement corona et un traitement chimique.

9. Procédé selon l'une quelconque des revendications précédentes, dans lequel l'ensemble du procédé de fabrication est achevé en un temps maximal de 15 minutes.

10. Procédé selon l'une quelconque des revendications précédentes, comprenant en outre une rétroaction de procédé entre ladite étape de moulage et ladite étape de métallisation, moyennant quoi suite à ladite étape de métallisation, lesdits paramètres de moulage peuvent être ajustés pour parvenir à un niveau de qualité souhaité pour lesdits produits.

11. Procédé selon la revendication 10, dans lequel ladite rétroaction de procédé comprend l'ajustement d'au moins l'un de la température du moule et du degré de polissage des cavités du moule.

12. Procédé selon l'une quelconque des revendications précédentes, comprenant un contrôle de l'atmosphère avoisinant le composant entre l'étape de moulage et l'étape de métallisation.

13. Procédé selon la revendication 12, dans lequel le contrôle de l'atmosphère avoisinant le composant consiste à entourer le composant avec de l'air filtré sous pression positive.

14. Procédé selon l'une quelconque des revendications précédentes, dans lequel le métal utilisé est l'un parmi l'aluminium, le chrome, le nickel, le titane, l'argent, le cuivre ou un alliage comprenant un ou plusieurs de ces métaux.
